# EUROPÄISCHE PATENTSCHRIFT

(11) **EP 0 705 992 B1**
(45) Veröffentlichungstag und Bekanntmachung des Hinweises auf die Patenterteilung: **11.11.1998**
(21) Anmeldenummer: 95810599.1
(22) Anmeldetag: 25.09.1995
(51) Int. Cl.: F16D 43/22, F16D 43/18, E01C 23/09

(54) **Antriebseinrichtung mit einer Fliehkraftkupplung**
Drive arrangement with a centrifugal clutch
Dispositif de transmission avec un embrayage centrifuge

(30) Priorität: 06.10.1994 CH 3012/94
(43) Veröffentlichungstag der Anmeldung: 10.04.1996
(73) Patentinhaber: HYDROSTRESS AG, CH-8330 Pfäffikon (CH)
(72) Erfinder: Bieri, Hans, jun., CH-8330 Pfäffikon (CH)
(74) Vertreter: Bosshard, Ernst

(56) Entgegenhaltungen:
- CH-A- 682 411
- DE-A- 2 441 009
- DE-C- 838 973
- FR-A- 1 152 446
- FR-A- 1 153 033
- FR-A- 1 179 053
- FR-A- 1 319 443
- FR-A- 1 566 741
- FR-A- 2 701 082
- GB-A- 245 713
- GB-A- 419 792
- US-A- 2 967 597

## Beschreibung

Die Erfindung bezieht sich auf eine Antriebseinrichtung nach dem Oberbegriff des Patentanpruches 1.

Fliehkraftkupplungen sind seit langem bekannt und dienen beispielsweise dazu, dass ein Antriebsmotor zunächst in nahezu unbelastetem Zustand anlaufen kann und sein volles Drehmoment erst nach dem Erreichen seiner Nenndrehzahl zu entwickeln hat. Dabei befinden sich die Fliehgewichte auf einem mit der Antriebswelle drehverbundenen Kupplungsorgan. Diese Fliehgewichte werden durch die Drehbewegung des Motors durch Fliehkraftwirkung gegen die Innenfläche eines üblicherweise etwa trommelförmigen weiteren Kupplungsorganes der Abtriebswelle angepresst. Bei einer Rotation der Antriebswelle nimmt die auf die Fliehgewichte wirkende Anpresskraft mit dem Quadrat der Drehzahl zu und bewirkt dadurch, dass durch Reibung die Abtriebswelle und die mit dieser verbundene Last langsam hochgefahren wird, bis zwischen Antriebswelle und Abtriebswelle Gleichlauf besteht. Bei einer plötzlichen Blockung der Abtriebswelle entsteht an den Fliehgewichten und an dem mit diesen zusammenwirkendem Gegenstück eine starke Abnützung, da ja die Antriebswelle trotz Blockierung der Abtriebswelle weiterdreht und dabei die auf die Fliehgewichte wirkende Anpresskraft auf Grund der Fliehkraft weiterhin wirksam ist.

Bei grossen Antriebsleistungen kann eine Blockierung der Abtriebswelle innert wenigen Sekunden bis zu einer rotglühenden Ueberhitzung der Reibbeläge und zu deren Zerstörung führen. Die dadurch bedingten Reparaturen verursachen einen zeitraubenden Stillstand der betreffenden Maschine oder Einrichtung.

In der GB-A-245713 ist eine Kraftübertragungseinrichtung dargestellt, bei der mit einer Antriebswelle eine erste Fliehkraftkupplung in Verbindung steht. Diese bewirkt im Anlaufstadium die Mitnahme eines Kupplungsorganes auf der Abtriebswelle. Auf dieser Abtriebswelle sitzt eine zweite Fliehkraftkupplung, welche nach dem Hochfahren der Drehzahl den angestrebten Gleichlauf von Antriebs- und Abtriebswelle bewirkt. Die Anordnung von zwei sich radial überlagernden Fliehkraftkupplungen verursacht einen hohen apparativen Aufwand und einen grossen Platzbedarf.

Aus der FR 1319 443 ist eine Fliehkraftkupplung bekannt, bei welcher gegen eine Antriebstrommel ein geschlitzter elastischer Ring anliegt. Im Anlaufstadium entsteht zwischen der Antriebs- und Abtriebswelle Schlupf. Mit zunehmender Drehzahl weitet sich der geschlitzte Ring unter der Wirkung der Zentrifugalkraft und bewirkt dadurch, dass zwischen Antriebs-und Abtriebswelle Gleichlauf entsteht. Zum Abbremsen oder Blockieren der Abtriebswelle ist eine mit dieser antriebsverbundenen Trommel vorhanden, gegen deren Umfang ein Band geschlauft ist. Zur Erzeugung der Bremswirkung wirkt das Bandende mit einem Hydraulikkolben zusammen.

Die CH-A 682411 zeigt eine Fliehkraft-Kupplung mit Fliehgewichten. Die einzelnen Fliehgewichte sitzen radialbeweglich auf einer Mitnehmerscheibe, die über Zwischenglieder kraftschlüssig mit einem Verbrennungsmotor verbunden ist. Bei erhöhter Drehzahl werden die Fliehkörper mit ihrem Reibbelag gegen einen trommelartigen Ringkörper angepresst und bewirken eine Mitnahme desselben. Somit hat die Mitnehmerscheibe bezüglich der Fliehkraftkupplung die Funktion eines Antriebselementes und der trommelartige Ringkörper die Funktion eines Abtriebselementes. Diese Konstruktion unterscheidet sich somit in der Funktionsweise nicht von herkömmlichen Fliehkraftkupplungen.

Mit der Erfindung soll die Aufgabe gelöst werden, eine mit einer Fliehkraftkupplung versehene Antriebseinrichtung zu schaffen, welche bei einer Blockierung der Abtriebswelle, das auf die Antriebswelle und damit auf den Motor rückübertragene Stossbelastung vermieden wird und zudem soll die Fliehkraftkupplung möglichst kompakt und betriebssicher sein und einen geringen Bauaufwand erfordern. Ferner soll die Fliehkraftkupplung bei einem Einbau in Bodenfugenschneidmaschine über eine handbetätigbare Bremsmöglichkeit für das Sägeblatt verfügen.

Diese Aufgabe wird durch die im Kennzeichen der Ansprüche 1 und 4 genannten Merkmale gelöst.

Im Gegensatz zu konventionellen Fliehkraftkupplungen befinden sich die Fliehgewichte nicht auf der Antriebsseite, sondern auf der Abtriebsseite der Kupplung.

Die Reibungsorgane, welche zusätzlich zur Fliehkraft-Kupplung zwischen der Antriebs- und Abtriebswelle unter Federwirkung ständig wirksam sind, bewirken zu Beginn der Drehbewegung der Antriebswelle, dass die Abtriebswelle mit Schlupf mitgenommen wird. Mit zunehmender Drehzahl der Abtriebswelle beginnen die Fliehgewichte zu greifen, bis schliesslich Gleichlauf zwischen der Antriebs- und Abtriebswelle entsteht.

Bei einer plötzlichen Blockierung der Abtriebswelle ist die Fliehkraft schlagartig, also ohne jede Zeitverzögerung nicht mehr wirksam. Dadurch werden die mit der Antriebswelle verbundenen Teile vor Ueberlastung geschützt und die Fliehkraftkupplung kann nicht überhitzt werden. Bei einer Blockierung ist zwischen Antriebs- und Abtriebswelle nur noch die relativ geringe, leicht beherrschbare durch die Federn bewirkte Reibkraft wirksam. Nach Behebung der Ursache für die Blockierung kann die Antriebseinrichtung - ohne dass Reparaturen notwendig sind - sofort wieder in Betrieb genommen werden.

Die einzelnen Fliehgewichtskörper sind so ausgebildet, dass sie sowohl mit einem axialen als auch mit einem radialen Reibbelag zusammenwirken. Die auf die Fliehgewichte einwirkenden Federn, welche eine ständig wirksame Reibverbindung der Fliehgewichtskörper mit dem antriebsseitigen Kupplungsorgan bewirken, lassen sich leicht austauschen und an unterschiedliche Anlauf-Drehmomentanforderungen anpassen. Diese Fliehkraftkupplung ist betriebssicher, beansprucht wenig Platz und lässt sich deshalb auch bei begrenzten Raumverhältnissen einbauen.

Eine derartige erfindungsgemässe Ausbildung der Fliehkraftkupplung ist beispielsweise für Kernbohreinrichtungen zur Erzeugung zylindrischer Mauer- oder Gesteinsbohrungen oder für Bodenfugenschneidmaschinen besonders geeignet. Wenn der Fräser oder das Sägeblatt plötzlich blokkiert, bewirkt die Fliehkraftkupplung eine sofortige Trennung der Antriebsleistung vom Motor. Dadurch kann ein Bruch des Fräsers oder des Sägeblattes oder eine Beschädigung von Kraftübertragungsgliedern vermieden werden.

In der Zeichnung sind Ausführungsbeispiele des Erfindungsgegenstandes dargestellt und werden nachfolgend näher erläutert. Es zeigen:
- Fig. 1: einen Längsschnitt durch eine erfindungsgemäss Antriebseinrichtung.
- Fig.2: einen Querschnitt nach der Linie I-I in Fig. 1.
- Fig.3: eine schematische Darstellung einer Bodennutenfräsmaschine
- Fig.4: eine Ausführungsform einer Fliehkraftkupplung, wie sie für Bodennutenfräsmaschinen verwendet werden kann
- Fig.5: einen Ausschnitt in vergrössertem Masstab eines Fliehgewichtes, gemäss Kreis in Fig. 4

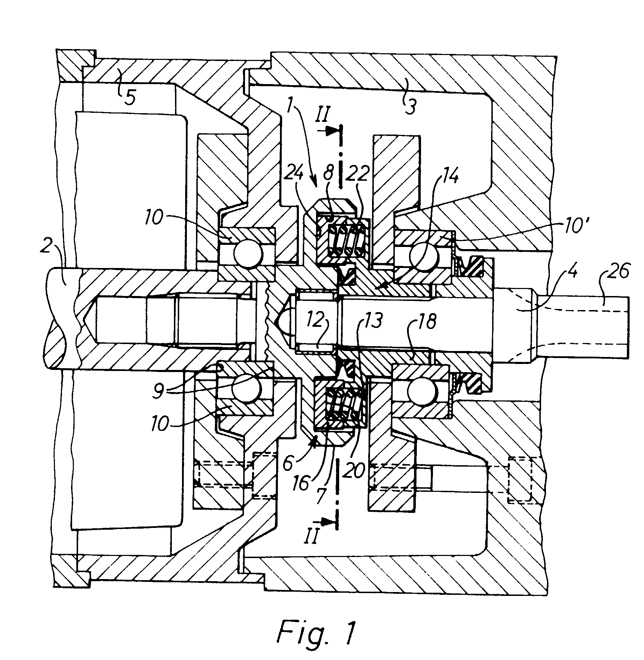

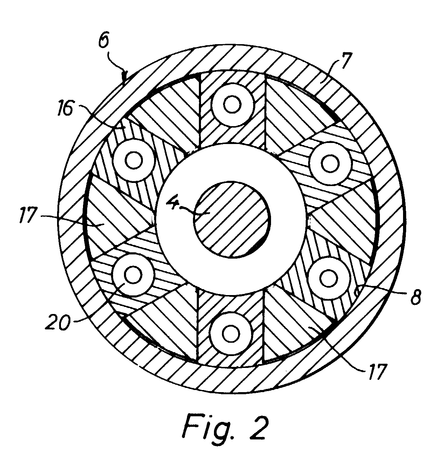

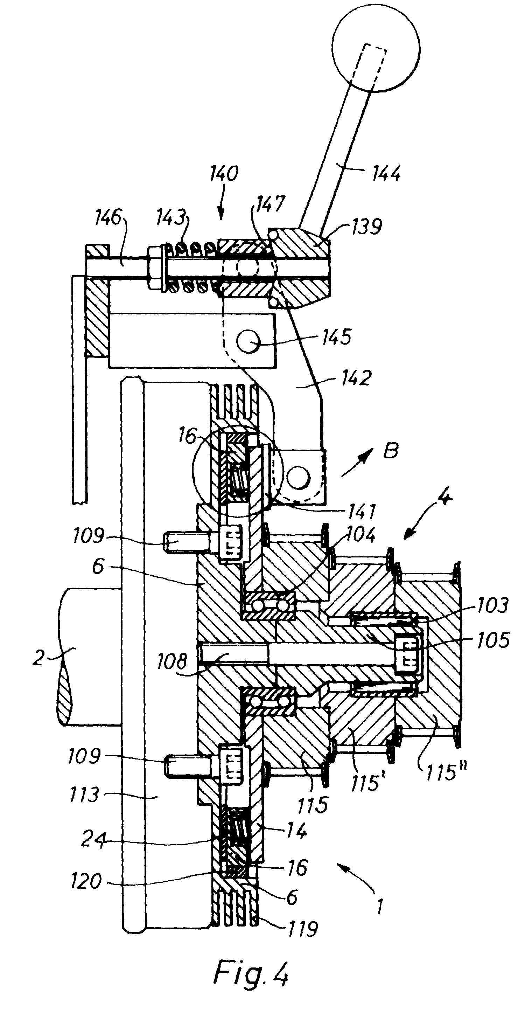

Die Fliehkraftkupplung 1 gemäss Fig. 1 befindet sich im Innern eines Gehäuses mit zylindrischem Mantel. Das Gehäuse enthält zwei Gehäuseteile 3, 5, die lösbar ineinandergreifen und durch nicht näher dargestellte Befestigungsmittel zusammengehalten sind. Das eine Ende des Gehäuseteiles 5 ist mit einem Motorgehäuse verbunden. Mit der Antriebswelle 2 ist der nicht näher dargestellte Motor, allenfalls unter Zwischenschaltung eines Getriebes, antriebsverbunden. Auf der Antriebswelle 2 sitzt drehfest ein erstes Kupplungsorgan 6, das einen im wesentlichen trommelartigen Teil 7 mit einer zylindrischen Reibfläche 8 enthält. Die Antriebswelle 2 und das erste Kupplungsorgan 6 bestehen aus herstellungstechnischen Gründen aus zwei Teilen; sie könnten indessen auch einteilig ausgebildet sein. Dieses erste Kupplungsorgan 6 wird zusammen mit der Antriebswelle 2 mittels Schultern 9 von einem im Gehäuseteil 5 getragenen Wälzlager 10 drehbar abgestiitzt.
Auf der Abtriebswelle 4 befindet sich von einer Nabe 18 ausgehend, drehfest ein abtriebsseitiges zweites Kupplungsorgan 14, das zur Aufnahme der einstückigen Fliehgewichtskörper - nachfolgend kurz als Fliehgewichte 16 bezeichnet - ausgebildet ist. Die Abtriebswelle 4 greift in eine koaxiale Bohrung der Antriebswelle 2 ein und ist in dieser mittels eines Wälzlagers, vorzugsweise in Form eines Nadellagers 12 abgestützt. Die Abtriebswelle 4 und das zweite Kupplungsorgan 14 könnten auch aus einem einzigen Stück bestehen. Am andern Ende der Abtriebswelle 4 ist ein Kupplungszapfen 26 zur Verbindung mit einem Arbeitsgerät, beispielsweise einer Kernbohreinrichtung vorhanden.
Wie aus Fig. 2 hervorgeht, sind im abtriebsseitigen Kupplungsorgan 14 eine Mehrzahl, vorzugsweise sechs, am Umfang gleichmässig verteilte Fliehgewichte 16 vorhanden. Diese Fliehgewichte 16 sitzen mit radialem Spiel lose in Ausnehmungen zwischen dreieckförmigen Teilen 17 des Scheibenteiles 13 des abtriebsseitigen Kupplungsorganes 14. Jedes dieser Fliehgewichte 16 besitzt eine zentrale, axiale Sacklochbohrung 20, in die je eine Wendelfeder 22 eingreift. Diese Wendelfedern 22 sind im eingebauten Zustand vorgespannt und liegen einerseits gegen den Grund der Sacklochbohrung 20 der Fliehgewichte 16 an und stützen sich anderseits mit ihrer Mantelfläche gegen den Scheibenteil 13 des abtriebsseitigen Kupplungsorganes 14. Diese Wendelfedern 22 erzeugen einen Druck der Fliehgewichte 16 gegen die radiale Reibfläche 24 des antriebsseitigen Kupplungsorganes 6. Dadurch entsteht eine ständig wirksame Reibverbindung zwischen der Antriebs- und Abtriebswelle 2, 4.

Diese Reibverbindung wird so schwach gewählt, dass bei Inbetriebsetzen des Motors - der ein Elektro- oder Hydraulikmotor sein kann - die Abtriebswelle 4 vorerst mit Schlupf mitgenommen wird. Mit zunehmender Drehzahl werden die Fliehgewichte 16 unter der Wirkung der Fliehkraft nach aussen gepresst und bewirken dann durch deren zusätzliche starke Reibung der Stirnfläche an der axialen Reibfläche 8, dass die Drehzahl der Abtriebswelle 4 bis zum Gleichlauf mit der Antriebswelle 2 beschleunigt wird. Die Anpresskraft der Fliehgewichte 16 nimmt mit dein Quadrat der Drehzahl zu, wobei diese Anpresskraft und dadurch die Reibung zwischen den Fliehkraftkörpern 16 und dem antriebsseitigen Kupplungsorgan 6 bei Erreichen der Solldrehzahl so gross wird, dass eine kraftschlüssige Verbindung mit gleichlaufender Antriebs- und Abtriebswelle 2, 4 entsteht. Die Solldrehzahl entspricht üblicherweise der Betriebsdrehzahl, mit der mit den Werkzeugen gearbeitet wird. Wenn die Abtriebswelle 4 durch irgendwelche Umstände plötzlich blockiert wird, sinkt schlagartig auch die Fliehkraft, sodass nur noch die von den Wendelfedern 22 erzeugte relativ geringe Reibkraft zwischen Antriebs- und Abtriebswelle 2, 4 übertragen wird. Dadurch wird die Rückübertragung einer Stossbelastung auf den Motor und allenfalls auf weitere mit diesem verbundene Teile, wie z.B. Getriebe, vermieden. Auch ist eine die Reibbeläge zerstörende Ueberhitzung nicht zu befürchten.

Ein Anwendungsgebiet einer derartigen mit der beschriebenen Fliehkraftkupplung versehenen Antriebseinheit besteht bei Kernbohrern, beispielsweise zur Erzeugung relativ grosser zylindrischer Oeffnungen in Gestein oder dicken armierten Betonmauern. Vor dem Bohrvorgang ist der Kernfräser und damit die Abtriebswelle praktisch unbelastet. Der als Hohlzylinder ausgebildete Kernfräser kann sich während des Bohrvorganges im Innern des Bohrloches verklemmen und dadurch plötzlich blockiert werden. Mit der vorliegend beschriebenen Fliehkraftkupplung lassen sich Beschädigungen am Motor, am Getriebe und allenfalls an weiteren drehverbundenen Teilen verhindern.

Durch entsprechende Dimensionierung kann diese Fliehkraftkupplung auch als übliche Schlupfkupplung bei Ueberbelastung verwendet werden.

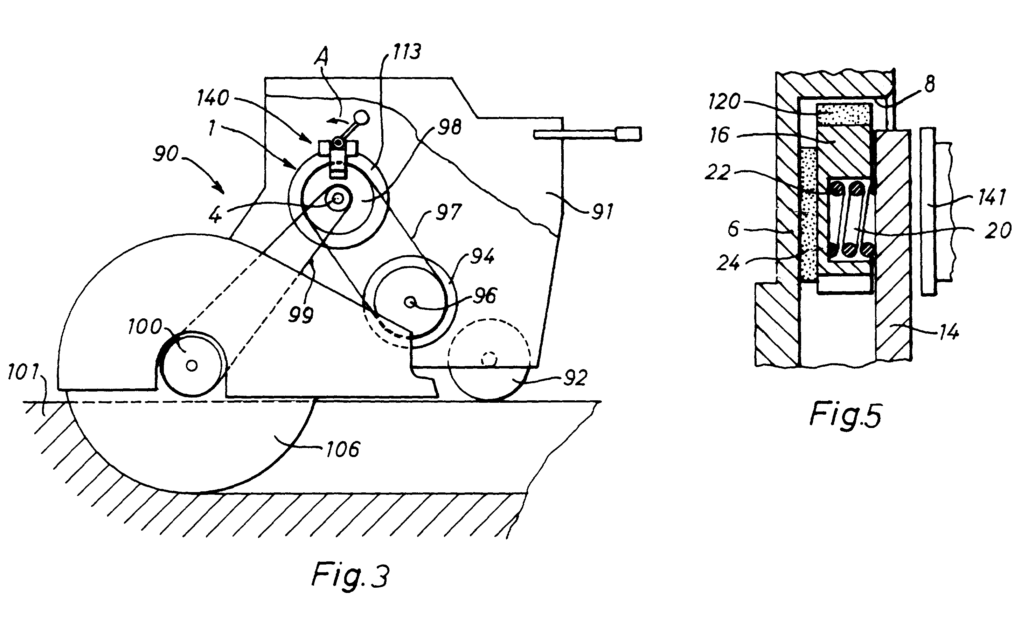

Fig. 3 zeigt schematisch eine Maschine zur Herstellung von Bodenfugen, bei der eine erfindungsgemässe Fliehkraftkupplung eingebaut ist. Diese fahrbare Bodenfugenschneidmaschine 90 weist ein mit Rädern 92 versehenes Chassis 91 auf und einen im Innern angeordneten Motor 94 mit Antriebswelle 96. Die Kraftübertragung vorn Motor 94 auf eine Antriebsscheibe 98 erfolgt mittels eines Zahnriemens 97 oder einer Kette.

Die Antriebsscheibe 98 steht mit der Antriebswelle 2 und mit einem Schwungrad 113 in Verbindung. Zwischen dem Schwungrad 113 und der Abtriebswelle 4 gemäß Fig. 3 befindet sich eine Fliehkraftkupplung 1, welche im Detail aus Fig. 4 hervorgeht. Ferner ist eine Bremseinrichtung 140 vorhanden, deren Einzelheiten ebenfalls aus Fig. 4 ersichtlich sind.

Die Uebertragung des Drehmomentes von der Abtriebswelle 4 auf das Ritzel 100 des Sägeblatt 106 erfolgt entweder durch einen oder mehrere Keilriemen 99 oder eine Kette.

Die Abtriebswelle 4 weist - gemäss Fig. 4 - drei Ritzel 115, 115', 115" mit unterschiedlichen Durchmessern auf. Diese dienen dazu, auf das Sägeblatt 106 unterschiedliche Drehzahlen zu übertragen.

Die Fig. 3-5 zeigen eine Ausführungsform einer Fliehkraftkupplung 1, welche sich insbesondere für Bodenfugenfräsen oder allgemein Bearbeitungsmaschinen von Stein, Beton oder ähnlichen Materialien eignet, grundsätzlich aber auch für andere technische Gebiete einsetzbar ist. Die Fliehkraftkupplung 1 ist dabei als Verbindungsglied einer Antriebswelle 2 mit einer Abtriebswelle 4 vorgesehen und ermöglicht einen gekuppelten oder entkuppelten Zustand zwischen diesen Wellen 2 und 4. Die Antriebswelle 2 ist über Zwischenglieder mit einem Antriebsmotor verbunden. Die Abtriebswelle 4 ist mit Ritzeln 115,115',115" unterschiedlichen Durchmessers bestückt, die jeweils über einen Zahnriemen 107 mit einem Sägeblatt 106 antriebsverbunden sind. Ein Schwungrad 113 sitzt drehfest auf der Antriebswelle 2.

Mit dem Schwungrad 113 ist mittels Schrauben 109 eine trommelartige, antriebsseitige Kupplungsscheibe 6 drehfest verbunden. Eine weitere Schraube 108 dient zur Befestigung eines Wellenfortsatzes 105 am Kupplungsorgan 6. Die Teile 105, 113, 6 werden aus herstellungstechnischen Gründen voneinander getrennt ausgeführt; sie könnten indessen auch aus einem einzigen Stück bestehen.

Abtriebsseitig ist ein Fliehgewichte 16 tragendes, zweites Kupplungsorgan 14 durch ein Kugellager 104 drehbar abgestützt. Zwischen dem Wellenfortsatz 105 und der mit Ritzeln 115;115',115" versehenen Abtriebswelle 4 befindet sich ein Nadellager 103. Die Drehachsen der Antriebswelle 2 und der Abtriebswelle 4 verlaufen koaxial. Die drei Ritzel 115,115',115" mit unterschiedlichen Durchmessern könnten zusammen mit der Kupplungsscheibe 6 auch aus einem einzigen Stück bestehen.

Mehrere, im vorliegenden Ausführungsbeispiel drei in einem Winkel von 120 Grad zueinander angeordnete Fliehgewichte 16 sind auf dem scheibenförmigen Kupplungsorgan 14 radial verschiebbar angeordnet. Wie am besten aus Fig. 5 ersichtlich ist, weist das trommelförmige Kupplungsorgan 6 eine ringförmige Reibfläche 8 auf. Die Fliehgewichte 16 des Kupplungsorganes 14 erzeugen je über eine Feder 22 eine in axialer Richtung wirkende konstante Federkraft mit der das jeweilige Fliehgewicht 16 gegen die radiale Fläche 24 des Kupplungsorganes 6 ausgedrückt wird. Die Feder 22 ist als vorgespannte Wendelfeder ausgebildet und sitzt in einer Bohrung 20 des Fliehgewichtes 16. Beim Drehen der Antriebswelle 2 erfolgt eine Mitnahme der mit der Abtriebswelle 4 drehverbundenen Kupplungsscheibe 14, wobei vorerst zwischen Antriebswelle 2 und Abtriebswelle 4 Schlupf entsteht. Mit zunehmender Drehzahl werden die Fliehgewichte 16 durch die Fliehkraft radial nach aussen gepresst. Dabei wird der Reibbelag 120 der Fliehgewichte 16 gegen die Reibfläche 8 des antriebsseitigen Kupplungsteiles 6 gedrückt. Diese Innenfläche könnte vorzugsweise ebenfalls mit einem Reibbelag versehen werden. Mit zunehmender Drehzahl der Abtriebswelle 4 steigt die auf die Fliehgewichte 16 wirkende Fliehkraft bis schliesslich Gleichlauf zwischen Antriebs-und Abtriebswelle 2, 4 besteht und die volle Drehmoment-Uebertragung stattfindet.

Das Reibmoment zwischen den radialen Reibflächen 24 und den Fliehgewichten 16 ist derart bemessen, dass die Abtriebswelle 4 und das mit ihr drehverbundene abtriebsseitige Werkzeug im belastungsfreien Zustand bis zum Greifen der Fliehkraftkupplung 1 mitgenommen und dementsprechend beschleunigt werden. Wenn das Sägeblatt 106 durch irgendwelche Umstäiide blockiert wird, fällt augenblicklich die Fliehkraft weg und die Antriebswelle 2 kann sich weiterdrehen, wobei lediglich die Reibung der Fliehgewichte 16 an den Reibflächen 24 wirksam ist.

Die Fliehkraftkupplung 1 weist zudem ein Bremsorgan 140 auf, mit dem sich die Abtriebswelle 4 unabhängig von der Antriebswelle 2 abbremsen lässt. Dieses Bremsorgan 140 enthält eine in axialer Richtung wirkende Bremsbacke 141, welche stirnseitig an das Kupplungsorgan 14 der Abtriebswelle 4 andrückbar ist. Ein zweiarmiger Hebel 142 weist an seinem einen Ende die Bremsbacke 141 auf. Das andere Ende ist axial verschiebbar auf einer Achse 146 abgestützt. Der Hebel 142 ist um einen Bolzen 145 schwenkbar gelagert. Ein Griffhebel 144 liegt mit seinem Kopf 139 über eine Kurvenfläche 147 gegen das obere Ende des zweiarmigen Hebels 142 an. Gegen diesen Hebel 142 liegt eine auf der Achse 116 sitzende Feder 143 an. Bei einer Verschwenkung des Griffhebels 144 wird der zweiarmige Hebel 142 in Richtung des pfeiles B bewegt und hebt dadurch die Bremsbacke 141 von der in der Fig. 4 dargestellten Bremsposition ab.

## Patentansprüche

1. Antriebseinrichtung mit einer motorgetriebenen Antriebswelle (2) und mit einer zu dieser koaxial angeordneten Abtriebswelle (4) und mit dazwischen angeordneter Fliehkraftkupplung, die Abtriebswelle (4) mit radial beweglichen Fliehgewichten (16) versehen ist, die mit einem ersten trommelartigen Kupplungsorgan (6) und einem zweiten, die Fliehgewichte (16) aufnehmendes Kupplungsorgan (14) zusammenwirken, wobei die Fliehgewichte (16) bei der Soll-Drehzahl eine kraftschlüssige Verbindung zwischen Antriebs- und Abtriebswelle (2, 4) erzeugen, dass das erste trommelartige Kupplungsorgan (6) mit der Antriebswelle (2) in Verbindung steht und das die Fliehgewichte (16) tragende zweite Kupplungsorgan (14) mit der Abtriebswelle (4) drehverbunden ist, die Fliehgewichte (16) je als einstückige Fliehgewichtskörper ausgebildet sind, eine Mehrzahl derselben am Umfang des zweiten Kupplungsorganes (14) verteilt angeordnet und radial verschiebbar angeordnet sind, und diese Fliehgewichtskörper unter der Wirkung der Zentrifugalkraft mit ihrer Stirnfläche gegen eine axiale Reibfläche (8) auf der Trommelinnenseite des ersten Kupplungsorganes (6) anpressbar sind, wobei eine ständig wirksame Reibverbindung vorhanden ist zwischen Antriebswelle (2) und Abtriebswelle (4) zur Erzeugung eines Schlupf zulassenden Mitnahme-Drehmomentes auf die Abtriebswelle (4) beim Hochfahren der Drehzahl der Antriebswelle (2), dadurch gekennzeichnet, dass die Fliehgewichtskörper (16) je mittels einer Feder (22) mit ihrer Mantelfläche gegen eine radiale Reibfläche (24) des ersten Kupplungsorganes (6) anpressbar sind.

2. Antriebseinrichtung nach Anspruch 1, dadurch gekennzeichnet, dass am Umfang des zweiten Kupplungsorganes (14) sechs Fliehkraftkörper (16) vorhanden sind.

3. Antriebseinrichtung nach Anspruch 1 oder 2, dadurch gekennzeichnet, dass die zueinander koaxial angeordneten An- und Abtriebswellen (2, 4) ineinandergreifen und im ineinandergreifenden Bereich durch ein Wälzlager (12) relativ zueinander drehbar abgestützt sind.

4. Bodenfugenschneidmaschine mit einem Motor (94), einer Antriebswelle (2), einer Abtriebswelle (4) und mit einem mittels Uebertragungselemente (99) drehverbundenen Sägeblatt (106) und zwischen der Antriebs- und der Abtriebswelle (2, 4) eine Fliehkraftkupplung (1) nach den Merkmalen des Anspruchs 1 vorhanden ist, ferner eine durch einen Handhebel (144) betätigbare Bremseinrichtung, mit der eine Bremsbacke (141) gegen das zweite Kupplungsorgan (14) anpressbar ist zum Abbremsen der Abtriebswelle (4) zumindest im Leerlauf der Antriebswelle (2).

5. Bodenfugenschneidmaschine nach Anspruch 4, dadurch gekennzeichnet, dass das zweite Kupplungsorgan (14) als Scheibe ausgebildet ist, die Bremsbacke (114) axial gegen diese Scheibe andrückbar ist, die Bremsbacke (141) am einen Ende eines um einen fixen Bolzen (145) schwenkbaren Hebels (142) sitzt und am andern Ende des Hebels (142) eine diesen in Bremsrichtung drükkende Feder (143) vorhanden ist.

## Claims

1. Driving mechanism with a motor-driven drive shaft (2) and a driven shaft (4) arranged coaxially relative thereto and a centrifugal clutch arranged in between, the driven shaft (4) is provided with radially movable centrifugal weights (16) which interact with a first drum-like clutch element (6) and a second clutch element (14) mounting the centrifugal weights (16), in which the centrifugal weights (16) at the desired speed produce a force-closed connection between the drive shaft and driven shaft (2, 4), so that the first drum-like clutch element (6) connects with the drive shaft (2) and the second clutch element (14) bearing the centrifugal weights (16) is rotatably connected with the driven shaft (4), the centrifugal weights are each in the form of one-piece centrifugal bodies, a plurality of the latter are distributed around the periphery of the second clutch element (14) and are radially displaceable, and said centrifugal weights can be pressed under the influence of centrifugal force with their outside face against an axial frictional surface (8) on the inside of the drum of the first clutch element (6), whereby there is a continually effective frictional connection between the drive shaft (2) and the driven shaft (4) to produce a drive torque permitting slip on the driven shaft (4) on increasing the speed of the drive shaft (2), characterised in that the centrifugal bodies (16) can be pressed by a spring (22) with their outer surface against a radial frictional surface (24) of the first clutch element (6).

2. Driving mechanism according to claim 1, characterised in that on the periphery of the second clutch element (14) there are six centrifugal bodies (16).

3. Driving mechanism according to claim 1 or 2, characterised in that the relatively coaxial drive shaft and driven shaft (2, 4) engage with one another and in the engaging region are supported rotatably relative to one another by a roller bearing (12).

4. Ground joint cutting machine with an engine (94), a drive shaft (2), a driven shaft (4) and a saw blade (106) rotatably connected by means of transmission elements (99), and between the drive shaft and the driven shaft (2, 4) there is a centrifugal clutch (1) according to the characteristics of claim 1, furthermore a braking mechanism actuated by a hand lever (144) can be pressed against the second clutch element (14) with a brake shoe (141) to brake the driven shaft (4) at least in the idle running of the drive shaft (2).

5. Ground joint cutting machine according to claim 4, characterised in that the second clutch element (14) is in the form of a disc, the brake shoe (114) can be pressed axially against said disc, the brake shoe (141) is at one end of a lever (142) pivotable about a fixed bolt (145) and at the other end of the lever (142) there is a spring (143) pressing the latter in braking direction.

## Revendications

1. Dispositif d'entraînement pourvu d'un arbre d'entraînement (2) mû par un moteur et d'un arbre de sortie (4) disposé coaxialement à celui-ci, et d'un embrayage centrifuge disposé entre ceux-ci, l'arbre de sortie (4) étant pourvu de poids centrifuges (16) radialement mobiles coopérant avec un premier organe d'embrayage (6) en forme de tambour et avec un second organe d'embrayage (14) recevant les poids centrifuges (16), les poids centrifuges (16) établissant, au régime de consigne, une liaison par adhérence entre les arbres d'entraînement et de sortie (2, 4), où le premier organe d'embrayage (6) en forme de tambour est relié à l'arbre d'entraînement (2), et le second organe d'embrayage (14), qui porte les poids centrifuges (16), est en liaison de rotation avec l'arbre de sortie (4), où les poids centrifuges (16) sont réalisés chacun sous forme d'un corps de poids centrifuge monobloc, où plusieurs de ceux-ci sont répartis sur le pourtour du second organe d'embrayage (14) et y sont disposés de façon radialement coulissante, et où les corps de poids centrifuges peuvent être serrés, par leur face frontale, sous l'action de la force centrifuge, contre une surface de frottement axiale (8) située sur la face intérieure du tambour du premier organe d'embrayage (6), une liaison par frottement existant en permanence entre l'arbre d'entraînement (2) et l'arbre de sortie (4), de manière à appliquer à l'arbre de sortie (4) un couple d'entraînement en rotation autorisant un certain glissement lors de la montée en régime de l'arbre d'entraînement (2),
caractérisé en ce que,grâce à un ressort (22), les corps de poids centrifuges (16) peuvent être serrés, par leur surface d'enveloppe, contre une surface radiale de frottement (24) du premier organe d'embrayage (6).

2. Dispositif d'entraînement selon la revendication 1, caractérisé en ce que six corps de poids centrifuges (16) sont prévus sur le pourtour du second organe d'embrayage (14).

3. Dispositif d'entraînement selon la revendication 1 ou 2, caractérisé en ce que les arbres d'entraînement et de sortie (2, 4) disposés coaxialement l'un à l'autre s'emboîtent de façon rotative l'un dans l'autre et s'appuient l'un sur l'autre, au niveau de leur emboîtement, par l'intermédiaire d'un roulement (12).

4. Machine à couper les joints au sol, comprenant un moteur (94), un arbre d'entraînement (2), un arbre de sortie (4) et un disque de coupe (106) relié de façon solidaire en rotation par l'intermédiaire d'éléments de transmission (99), et comprenant, entre l'arbre d'entraînement et l'arbre de sortie (2, 4), un embrayage centrifuge (1) selon les caractéristiques de la revendication 1, comprenant d'autre part un dispositif de frein actionné par un levier à main (144) et permettant de serrer une mâchoire de frein (141) contre le second organe d'embrayage (14), de façon à freiner l'arbre de sortie (4) au moins au régime ralenti de l'arbre d'entraînement (2).

5. Machine à couper les joints au sol, selon la revendication 4, caractérisée en ce que le second organe d'embrayage (14) est réalisé sous forme d'un disque, que la mâchoire de frein (114) peut être serrée axialement contre ce disque, que la mâchoire de frein (141) est logée à l'extrémité d'un levier (142) oscillant autour d'un axe fixe (145), et qu'à l'autre bout de ce levier (142), un ressort (143) est prévu, qui pousse le levier dans le sens du freinage.
